Europäisches Patentamt

European Patent Office

Office européen des brevets

(11) Publication number: **0 282 682**
**A1**

# EUROPEAN PATENT APPLICATION

(21) Application number: **87830212.4**

(22) Date of filing: **05.06.87**

(51) Int. Cl.⁴: **F01N 3/04**

(30) Priority: **19.03.87 IT 4775087**

(43) Date of publication of application:
**21.09.88 Bulletin 88/38**

(84) Designated Contracting States:
**AT BE CH DE ES FR GB GR LI LU NL SE**

(71) Applicant: **Celluprica, Dante**
**Via Francesco Sivori 34**
**I-00135 Roma(IT)**

(72) Inventor: **Celluprica, Dante**
**Via Francesco Sivori 34**
**I-00135 Roma(IT)**

(74) Representative: **Gristina, Giorgio**
**Studio Rag. GRISTINA Giorgio Via Po, 49**
**I-00198 Roma(IT)**

(54) **Device for filtrate the exhaust gases of internal combustion engine and method of carry out the filtration of same.**

(57) A device (10,50) to filtrate the exhaust gases of an internal combustion engine, and particularly for motor-vehicles, comprising: a container (11), preferably a parallelepiped case, provided with a top plug closed inlet opening (15) to fill said container with water (17) or any other suitable liquid up to a predetermined level (19) and a bottom plug closed outlet opening (16) to discharge the water when necessary and allow the change of same; a free space (18) above said water level (19) wherein the opposite walls of said container (10,50) are provided with an outer inlet pipe section (12) connectible to the exhaust pipe of said engine and having an extension (13) within container (11), so that the exhaust gases to be filtrated are forced into water (17) near the bottom of same, and an outlet pipe section (14), respectively, to discharge to the atmosphere the filtrated and cooled exhaust gases.

A method to filtrate said exhaust gases by such device (10,50) to discharge to the atmosphere a cooled, clean exhaust gas.

FIG.1

## Device to filtrate the exhaust gases of internal combustion engine and method to carry out the filtration of same

The present invention relates to a device to filtrate the exhaust gases discharged from exhaust manifolds and particularly from the exhaust pipe of an internal combustion engine, such gases being generally discharged directly to the atmosfere whith those components which are hurtful not only for the human health but also for all other things being in the neighbourhood. The present invention relates also to a method for carrying out the cited filtration of exhaust gases by using such a device in order to discharge to the atmosphere exhaust gases which are substantially cold and clean.

The hurtful effects and several disadvantages which are deriving from a direct disharge to the atmosphere of the exhaust gases coming out from the operative cycles of internal combustion engines, either of the gasoline or gas oil type, in accordance to the prior art may be considered as well known. However the attention of the skilled in the art was up to date specially devoted to improve the characteristics of the fuel to be fed, without any actually satisfactory result. On the other hand these exhaust gases are hurtful not only for the human health, particularly where the use of motor-vehicles of any kind and power is more and more diffused, but also for anything which is existing in the environment, e.g. monuments, buildings as well as all types of trees and plants. In countries wherein a heavy traffic is possible, a very limited advantage was some time get out by using exhaust manifolds having upwards exhaust pipe, as suggested particularly for autobuses, to avoid the immediate, disagreable influence of the exhaust gases coming out from any conventional horizontal exhaust pipe. It will be understood that the advantage is only momentary, as the hurtful components, the unburnt particles of the fuel originally ged and then subjected to the operative cycles of the engine are, in this manner, spread at a short height and fall down progressively with an increasing defilement of the surrounding atmosphere.

The invention as claimed is intended to solve the problem of how create a method and a device to filtrate the exhaust gases of various installations wherein a fuel is fed to carry out operative cycles, and particularly to filtrate the exhaust gases of motor-vehicles wherein internal combustion engines are used, as this power source has an increasing employment and the exhaust gases discharged to the atmosphere contain a remarkable quantity of hurtful components capable of an easy diffusion therein, particularly in certain operative conditions of the engine used to carry out the combustion process.

In accordance with the invention a method is provided to filtrate the exhaust gases by means of a forced passage of same-due to the operative cycles of the engine - through a volume of water or any other suitable liquid contained in a suitable container, with the purpose of suitably braking by the water the forced flow of the exhaust gases and restraining therein those particles which according to the prior art could otherwise be dragged out the exhaust pipe located after the muffler and then discharged directly to the surrounding external air. Such particles are, on the contrary, deposited into the water or liquid used as a filtrating means.

The device in accordance with this invention is substantially constituted by a container preferably shaped as a parallelepiped case, provided with: a top, plug closed opening to fill the container with water or any other suitable liquid up to a predetermined level sufficient for a satisfactory filtration of exhaust gases within a desired time interval, and precisely within a se lected operative time of the engine which generates such exhaust gases to be filtrated; a bottom, plug closed outlet opening to discharge and/or change the filtrating water or liquid, as desired, the volume of such water or liquid being up to a level above which a free space is provided in the container; an inlet pipe section protruding outwards one wall of the container within the area corresponding to such inner free space, said outer pipe section being connectible to and detachable from the exhaust manifold of the motor-vehicle and being extended inside the container to be further plunged into the water in order to guide the exhaust gases to the bottom of same for filtrating purposes; an outlet pipe section protruding outwards the opposite wall of the container within the area corresponding to such inner free space in order to discharge to the atmosphere the filtrated clean and cooled exhaust gases.

In this manner, the exhaust gases coming out from the exhaust pipe of the motor-vehicle are forced by the power of the engine through the inlet pipe section of the device and extension of same to be plunged into the water and filtrated by this latter, and then forced above the level of the water into the free space from which it pass through the outlet pipe section to be discharged therefrom to the atmosfere as exhaust gases substantially free of hurtful components.

The advantages of method and device according to this invention should be comprehensible and may also be evaluated by the skilled in the art on the ground of its possible and simple realization. The easy filling and changing the filtrating water or liquid; the easy assembling or disassembling of the container and connection to the exhaust pipe of the motor-vehicle; and also the possibility of using a device provided with two or more suitably intercommunicating bins are evidently important to consider this invention capable of satisfying what is necessary for different applications.

To better interpret the ground principles of the invention and deduce the useful features to embody same practically, a description is reported hereafter which relates to two embodiments selected as examples referred to the schematic illustrations of the accompanying drawing, wherein:

Fig.1 shows a schematic sectional elevation of a filtrating device according to a first embodiment of the invention, wherein a container with a single bin for filtrating water or liquid is provided;

Fig.2 is a perspective view of a container with filtrating water or liquid deduced from Fig.1;

Fig.3 is a perspective view of a second embodiment of device according to this invention, wherein a single container is provided with several bins formed by using partition walls and pipes of intercommunication.

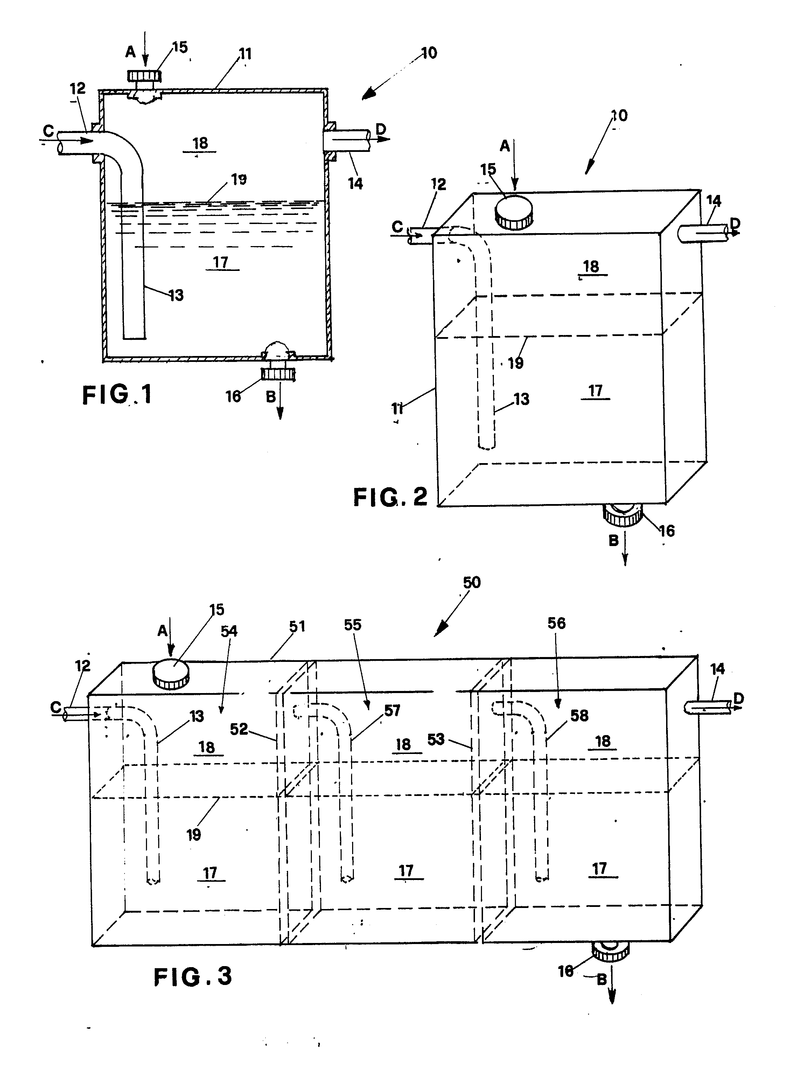

Turning now to the drawing and firstly to Figs.1 and 2 relating to the first embodiment of this invention, it is first of all to point out that these illustrations correspond substantially to those included in the accompanying drawing of the specification originally filed by the applicant and the numeral reference Fig.1, Fig.2, and also Fig.3 corresponds to that of the original application.

In Figs.1 and 2 the filtrating device, now indicated by the re ference numeral 10, consists of a case-like container 11 having a parallelepiped shape and provided with a top plug closed inlet opening 15 (ex 5) and a bottom plug closed outlet opening 16 (ex 6). The arrows A and B evidence the functions of filling and discharging of the water into and from container 11, respectively, and water level 19 indicated that the volume of the filtrating water is sufficient for a normal operation of the device, a free space 18 (ex 3) being provided above same.

Differently from the prior art, the exhaust gases coming out from the exhaust pipe of a conventional internal combustion engine are not discharged directly to the atmosphere, rather guided through an inlet pipe section 12 (ex 1) which is connectible to such exhaust pipe and then through a pipe section 13 to be considered as an extension of pipe section 12. Extension pipe 13 is, in turn, located inside container 11 as an element plunged into water volume 17 (ex 2) and the outlet end of same is near the bottome of container 11 so that the exhaust gases of the engine are directed towards the lowest zone of filtrating water 17 according to arrow C because of the thrust due to the operative cycles of the engine.

The impelling action provides the diffusion of the hurtful particles of the exhaust gases within the volume of filtrating water 17 (ex 2), a restraining action of same and a further quick diffusion of filtrated exhaust gases towards free space 18 above level 19. The scattering of such particles in this latter depends on the volume of the filtrating water and height of level 19, as well as on the features of single components of the exhaust gases and operative conditions of the engine to be also considered on the ground of the injected fuel. Because of the continuous thrust provided by the operative cycles of the engine, the more or less filtrated exhaust gases will after wards reach free space 18 to be then discharged to the atmosphere through outlet pipe section 14 (ex 4) according to arrow D.

An example of the second embodiment of the invention is schematically illustrated in Fig.3 and concerns both an improvement of the filtrating features with respect to those supposed by using a device according to Figs.1 and 2 (wherein a container 11 having a single bin only is provided, as said above), and the necessary adaptation of this second filtrating device for filtrating exhaust gases of higher power engines, e.g. for big lorries or the like. The schematic view of Fig.3 corresponds substantially to Fig.3 of the original application and shows a filtrating device, now indicated by reference numeral 50, which comprises a single, elongated container 51 provided with three communicating bins 54, 55, 56 formed by partition walls 52, 53 which are suitably spaced for such purpose. Each bin 54, 55, 56 of container 51 is substantially used likely container 11 of Figs.1 and 2, so that component members which are carrying out like functions are indicated by like reference numerals in this new drawing.

Container 51 has a top plug closed inlet opening 15 to fill the container with water as indicated by arrow A, and a bottom plug closed outlet opening 16 to discharge the contained water as indicated by arrow B, by taking in mind that bins 54, 55 and 56 are communicating with each other, so that lije level 19 is provided in these latter. At first glance the main different feature of Fig.3 with respect to Figs.1 and 2 could appear the very larger horizontal area of the cooperating side-by-side bins and therefore the greater volume of filtrating water also with same level 19. While important by itself, this consideration is overcome by the importance to be attributed to the forced movement of the exhaust gases being filtrated in a sequential manner through three bins 54, 55, 56.

An outer inlet pipe section 12 is still provided here to guide the exhaust gases coming out from a conventional exhaust pipe to which pipe section 12 is connected and supposed as discharged from a higher power engine, e.g. for big lorries or the like. After pipe section 12, the forced movement of the exhaust gases prosecutes through inlet pipe extension 13 towards the lowest zone of filtrating water 17, as already specified above by referring to the first embodiment. But differently from this latter, after this first filtrating action in bin 54, the partially filtrated exhaust gases reach free space 18 and their forced movement prosecutes through a first intercommunication pipe 57 to carry out a second step of filtration within the water of bin 55.

By looking through the illustration of Fig.3 it will be understood that like movement and filtrating effect are achieved through the second intercommunication pipe 58 and third bin 56 of container 51, to be considered the third and final filtrating step of this example wherein a container having only three bins intercommunicating with each other are provided. The sequential passage of the exhaust gases to be filtrated through two, three or more bins facilitates evidently a more efficient filtrating action as well as a sufficient cooling of the gases, so that these latter, after having reached the free space above the water level of the last bin may be discharged to the atmosphere as a filtrated, clean and cold gas, i.e. substantially free of hurtful substances.

The sequential passage of the exhaust gases to be filtrated through two, three or more bins is obviously still dependent on the power and operative conditions of the engine, as well as on the horizontal area of each bin and level of water, as said above. A suitable selection may allow a suitable improvement of the fil trating conditions and effects, as well as an efficient application of method and device in accordance with the invention, in order to realize that, differently from the prior art, exhaust gases actually more clean and also sufficiently cooled are discharged to the atmosphere.

As premised, method and device in accordance with the invention are intended to solve the problem of filtrating exhaust gases of internal combustion engines, particularly, but not solely, referred to the installation of these latter on motor-vehicles. By taking into account the more and more diffusion of the means of transportation whereon such engines are used, it will be obvious the importance of filtrating such gases to eliminate or reduce as much as possible the toxicity of the atmosphere.

Method and device according to this invention may however employed also to industrial installations wherein both dimensional features of the device and number of bins to carry out sequential steps of partial filtration may be selected to achieve the most favourable filtrating conditions. Modifications are then possible within the ground principles of the invention as regards the materials to be used for a container in its most suitable operative conditions for motor-vehicles and/or fixed installations wherein exhaust gases containing hurtful components are usually discharged to the atmosphere.

## Claims

1. Device to filtrate exhaust gases of an internal combustion engine, particularly when used for motor-vehicles, before they are discharged to the atmosphere from the exhaust manifold of motor-car, big lorries and the like, by exploiting the forced movement of such gases during the operative cycles of the engine through a suitable volume of water or appropriate liquid, so that their hurtful components may be restrained and deposited in the water and clean cooled gases may be discharged to the atmosphere, **characterized** in that it comprises:
- a container, preferably shaped as a parallelepiped case (11) provided with a top plug closed inlet opening (15) to fill with water or any other suitable liquid said container (11) up to a level (19) to reach a predetermined volume (17) therein considered sufficient for the desired finality and leaving a free space (18) thereabove;
- a bottom plug closed outlet opening (16) to discharge said volume of water;
- an outer inlet pipe section (12) protruding from one of the container walls at the height of such free space (18), to be connectible to a conventional exhaust pipe so that the exhaust gases coming out from this latter are forced by the thrust of the engine power through said pipe section (12) and then through the extention (13) of same which is plunged into water (17) with its end near the bottom of container (11) as a starting point for the restraining and depositing action of the hurtful components of the exhaust gases provided by the water or suitable li quid during the forced movement of these gases towards free space (18);
an outlet opening (14) formed by an outer pipe section protruding from the opposite wall of container (11) at the height of said free space (18) to discharge therethrough the filtrated clean and cooled exhaust gases to the atmosphere.

2. A device as claimed in claim 1, **characterized** in that it comprises a container preferably shaped as a parallelepiped elongated case provided with:
- partition walls (52,53) to form corresponding bins (54,55,56) each one having a function like that claimed in claim 1 and therefore a bottom zone for the filtrating water (17) up to level (19) and a free space (18) above same;
- an outer inlet pipe section (12) protruding from one of the container walls at the height of said free space (18), which is connectible to a conventional exhaust pipe and extended into said bin (54) by means of a pipe extension (13) plunged into water (17);

- pipes (57,58) to provide the intercommunication between bins (54,55) and (55,56), respectively;

- an outlet pipe section (14) protruding from the opposite wall of container (51) at the height of said free space (18),

so that the exhaust gases coming out from said exhaust pipe are firstly passed through pipe section (12) and pipe extension (13) to be subjected to a first filtrating action within bin (54) by means of the water contained therein and prosecute then consecutively into water of bin (55) through pipe (57) and into water of bin (56) through pipe (58) to carry out the second and third step of the filtration up to the free space (18) above level (19) of the water within bin (56), to be discharged through said outlet pipe section (14) as filtrated, clean and cooled gases free of hurtful substances.

3. A method to filtrate exhaust gases, particularly those which are due to the operative cycles of internal combustion engines, **characterized** in that the exhaust gases coming out from a conventional exhaust pipe are canalized into a proper device (10) as claimed in claims 1 and 2 in order to be guided through water or suitable liquid under the thrust provided by the engine during its operative cycles and braked by the water for restraining and depositing therein their hurtful components, the forced movement of the exhaust gases being then prosecuted up to said free space (18) above level (19) of the water from which the substantially clean and sufficiently cooled gases are then discharged to the atmosphere through said outlet pipe section (14) of device (10).

4. A method to filtrate exhaust gases, particularly those which are due to the operative cycles of internal combustion engines as claimed in claim 3, **characterized** in that the filtration of the exhaust gases coming out from a conventional exhaust pipe is carried out in sequential steps by means of a proper device (50) as claimed in claim 2, the depuration of these gases being carried out gradually in a continue and sequential manner by passing them through a set of intercommunicating bins (54,55,56) of said container (50) up to their final discharge to the atmosphere as suitably cooled clean exhaust gases.

FIG.1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 875 743 (MERCER)<br>* Column 2, line 4 - column 3, line 17; column 4, lines 27-37; figures 1-3,6-8 * | 1-4 | F 01 N 3/04 |
| | --- | | |
| X | US-A-1 421 432 (EMBANKS)<br>* Page 1, lines 23-70; figures 1-3 * | 1,3 | |
| | --- | | |
| X | US-A-4 282 017 (CHEN)<br>* Column 2, lines 8-57; figures 1-6 * | 1-4 | |
| | --- | | |
| X | DE-C- 209 837 (DEUTSCHE SADUYN)<br>* Page 1, line 36 - page 2, line 6; figures 1-3 * | 1,3 | TECHNICAL FIELDS SEARCHED (Int. Cl.4) |
| | --- | | |
| X | FR-A-2 162 785 (RAY)<br>* Whole document * | 1,3 | F 01 N |
| | ----- | | |

The present search report has been drawn up for all claims

| Place of search | Date of completion of the search | Examiner |
|---|---|---|
| THE HAGUE | 18-08-1987 | HAKHVERDI M. |